Europäisches Patentamt

European Patent Office

Office européen des brevets

(19)

(11) Veröffentlichungsnummer: **0 566 878 A1**

## (12) EUROPÄISCHE PATENTANMELDUNG

(21) Anmeldenummer: **93104685.8**

(22) Anmeldetag: **22.03.93**

(51) Int. Cl.5: **B01J 23/64**, B01J 21/04, B01J 21/06, B01J 21/08, B01J 29/04, B01J 37/02, B01J 35/04, F01N 3/20

(30) Priorität: **21.04.92 DE 4213018**

(43) Veröffentlichungstag der Anmeldung: **27.10.93 Patentblatt 93/43**

(84) Benannte Vertragsstaaten: **AT BE DE ES FR GB GR IT NL SE**

(71) Anmelder: **Degussa Aktiengesellschaft Weissfrauenstrasse 9 D-60311 Frankturt(DE)**

(72) Erfinder: **Leyrer, Jürgen, Dr. Im Vogelsang 5 W-8755 Alzenau(DE)**
Erfinder: **Lox, Egbert, Dr. Grünaustrasse 9 W-6450 Hanau 9(DE)**
Erfinder: **Engler, Bernd, Dr. Treuener Strasse 2 W-6450 Hanau 9(DE)**
Erfinder: **Domesle, Rainer Dr. Rannenbergring 56 W-8755 Alzenau(DE)**

(54) **Katalysator zur oxidativen Reinigung der Abgase von Dieselmotoren.**

(57) Die Erfindung betrifft einen Katalysator zur oxidativen Reinigung der Abgase von Dieselmotoren mit hoher Konversionsleistung für Kohlenwasserstoffe und Kohlenmonoxid und gehemmter Oxidationswirkung gegenüber Stickoxiden und Schwefeldioxid, enthaltend einen monolithischen Katalysatorkörper mit frei durchströmbaren Kanälen aus Keramik oder Metall, der mit einer aktivitätsfördernden Dispersionsbeschichtung aus den feinteiligen Metalloxiden Aluminiumoxid, Titanoxid, Siliziumoxid, Zeolith oder deren Abmischungen als Träger für die katalytisch aktiven Komponenten beschichtet ist, wobei die aktiven Komponenten als mit Vanadin dotierte bzw. mit einer oxidischen Vanadinverbindung in Berührung stehende Platingruppenmetalle Platin, Palladium, Rhodium und/oder Iridium vorliegen.

Die verminderte Oxidationswirkung gegenüber Schwefeldioxid wird dadurch erzielt, daß es sich bei den feinteiligen Metalloxiden um in der Oberfläche modifiziertes Aluminiumoxid, Titanoxid, Siliziumoxid, Zeolith oder deren Abmischungen handelt.

Die Oberflächenmodifikation besteht in einer beschichtung der spezifischen Oberfläche der Metalloxide mit einer 1 bis 5 Monolagen umfassenden Schicht aus Titandioxid oder Siliziumdioxid.

EP 0 566 878 A1

Rank Xerox (UK) Business Services
(3.10/3.6/3.3.1)

Gegenstand der Erfindung ist ein Katalysator zur oxidativen Reinigung der Abgase von Dieselmotoren mit hoher Konversionsleistung für Kohlenwasserstoffe und Kohlenmonoxid und gehemmter Oxidationswirkung gegenüber Stickoxiden und Schwefeldioxid, enthaltend einen monolithischen Katalysatorkörper mit frei durchströmbaren Kanälen aus Keramik oder Metall, der mit einer aktivitätsfördernden Dispersionsbeschichtung aus den feinteiligen Metalloxiden Aluminiumoxid, Titanoxid, Siliziumoxid, Zeolith oder deren Abmischungen als Träger für die katalytisch aktiven Komponenten beschichtet ist, wobei die aktiven Komponenten als mit Vanadin dotiertes bzw. mit einer oxidischen Vanadinverbindung in Berührung stehendes Platin, Palladium, Rhodium und/oder Iridium vorliegen.

Dieselabgase enthalten als Schadstoffe, die durch eine geeignete Abgasreinigung entfernt werden sollten, Kohlenmonoxid, Aldehyde, Kohlenwasserstoffe, polyaromatische Kohlenwasserstoffe (PAK), Schwefeldioxid sowie Stickoxide. Das Schwefeldioxid im Abgas wird aus dem im Dieselkraftstoff zu ca. 0,3 % enthaltenem Schwefel gebildet und führt zu einem Schwefeldioxid-Anteil im Abgas von 10 - 200 ppm, abhängig von der jeweiligen Last und Drehzahl des Motors. Dieselmotoren erzeugen zwar wesentlich weniger Stickoxide als Otto-Motoren, ihr Anteil im Abgas ist jedoch noch rund dreimal so hoch wie im Abgas eines Otto-Motors nach Reinigung mit Hilfe eines geregelten Dreiweg-Katalysators

Neben diesen bei den typischen Abgastemperaturen eines Dieselmotors von 225 bis 350° C im wesentlichen gasförmigen Schadstoffe emittieren Dieselmotoren je nach Betriebsweise erhebliche Anteile von Dieselrußpartikel, die aus einem Rußkern und darauf adsorbierten unverbrannten Kohlenwasserstoffen, polyaromatischen Kohlenwasserstoffen (PAK) sowie Metallverbindungen, Wasser und Sulfaten bestehen.

Zur Reinigung der Dieselabgase können nicht die bei Otto-Motoren eingesetzten Dreiweg-Katalysatoren verwendet werden, da die Dieselabgase einen hohen Sauerstoffanteil von 1 bis 15 Vol.% aufweisen. Dies führt zu Luftzahlen Lambda der Dieselabgase großer als 1. Dreiweg-Katalysatoren benötigen dagegen für die Oxidation der Kohlenwasserstoffe und Kohlenmonoxid sowie die gleichzeitige Reduktion der Stickoxide stöchiometrisch zusammengesetzte Abgase mit Luftzahlen Lambda gleich 1.

Zur Verminderung der Partikelemission von schwefeloxid- und stickoxidhaltigen Dieselabgasen sind bereits Filter auf Basis von feinporigen Keramikmonolithen mit wechselseitig verstopften Kanälen (sog. Wandflußfilter), Schaumkeramik, Drahtgestrickpakete, keramische Rohre, Keramikfaserwickelfilter etc. vorgeschlagen worden. Mit Hilfe dieser Filtrationseinrichtungen können die Dieselrußpartikel aus dem Abgasstrom entfernt werden. Allerdings können die daraus abfiltrierten Partikel nur in wenigen Betriebszuständen, in denen die Abgastemperatur hoch genug ist, durch Verbrennen beseitigt und die Filter auf diese Weise wieder regeneriert werden.

Zur Verbesserung des Regenerationsverhaltens der obigen Filtersysteme sind bereits Beschichtungen mit zündtemperatursenkenden Katalysatorsubstanzen, wie Vanadinpentoxid, Vanadaten, z. B. AgVO$_3$ und Perrhenaten bekannt, wobei diese aktiven Substanzen mit einem feinteiligen Trägermaterial dotiert sein können und daneben noch ein Edelmetall, wie Platin, eingebracht durch Imprägnierung, vorliegen kann (DE-OS 32 32 729, DE-OS 31 41 713 und DE-OS 34 07 712 der Anmelderin).

Mittlerweile hat sich gezeigt, daß bei den zur Zeit überwiegend verwendeten Wandflußfiltern, auch wenn sie mit katalytisch aktiven Komponenten der vorstehend erwähnten Art beschichtet sind, die Konversionsleistung für Kohlenwasserstoffe und Kohlenmonoxid, insbesondere bei den für Dieselmotoren niedrigen Abgastemperaturen, nicht befriedigt. Außerdem birgt die Verwendung von mit Katalysator- und Trägerstoffen beschichteten Wandflußfiltern den Nachteil eines die Motorleistung beeinträchtigenden hohen Abgasgegendrucks, insbesondere bei erhöhter Beladung mit Rußpartikeln. Bemühungen, durch eine erhöhte Katalysatorbeladung diesen Nachteil auszugleichen, waren nicht erfolgreich. Eine Vergrößerung der geometrischen Abmessungen, die zu einer Verminderung des Abgasgegendrucks führen können, lassen die bei den meisten Fahrzeugen beschränkten Platzverhältnisse nicht zu.

Eine entscheidende Verbesserung der Abgasreinigung von Dieselmotoren brachte erst ein gattungsgemäßer Dieseloxidationskatalysator (DE-OS 39 40 758). Dabei handelt es sich um einen ohne Partikelabscheidung und zyklische Abreinigung kontinuierlich arbeitenden Katalysator zur oxidativen Reinigung der Abgase von Dieselmotoren mit hoher Konversionsleistung für Kohlenwasserstoffe und Kohlenmonoxid bei niedrigen Temperaturen und gehemmter Oxidationswirkung gegenüber NO und SO$_2$ mit auf feinteiligem Aluminiumoxid, Titanoxid und Siliziumoxid, Zeolith sowie deren Abmischungen als aktivitätsfördernden Trägerstoff aufgebrachten Vanadinverbindungen und Platingruppenmetallen als aktive Komponente.

Dieser aus dem Stand der Technik bekannte Katalysator weist gegenüber den Wandflußfiltern eine erhöhte Konversionsleistung für die gasförmigen Schadstoffe bei gleichzeitig gutem Ausbrand der Rußpartikel auf. Diese positive Wirkung kann unter der Prämisse gleicher Zelldichte damit erklärt werden, daß die die langen Kanäle des frei durchströmbaren monolith- bzw. wabenförmigen Katalysators passierenden Moleküle bzw. Agglomerate wesentlich häufiger effektiv in Kontakt mit der katalytisch beschichteten Kanaloberfläche gelangen als bei Wandflußfiltern, bei denen jeder Abgasbestandteil zunächst nur einmal durch die katalytisch beschichtete poröse Wand fließt und danach durch die in einen gegebenen Kanal durch die vier Nachbarkanäle eintretenden Stromfäden in die Mitte des Abflußkanals gedrängt, konzentriert und von vergleichbar hohen Wandkontakten ferngehalten wird.

Die mit dem beschriebenen Dieseloxidationskatalysator erreichten Reinigungsgrade von Dieselabgasen stellen eine wesentliche Verbesserung der mit Filtersystemen erzielbaren Relnigungswirkung dar. In Anbetracht der demnächst gültigen verschärften gesetzlichen Bestimmungen für die Abgasreinigung von Dieselmotoren ist jedoch eine weitere Verminderung der Partikelemission sowie eine Verbesserung der Langzeitstabilität bei gleichbleibend hoher Konversion für die gasförmigen Schadstoffe Kohlenwasserstoffe, Kohlenmonoxid und Stickoxide notwendig.

Da die Agglomeration der Rußpartikel ganz wesentlich durch das Vorhandensein von Sulfaten im Abgas gefördert wird, müssen Maßnahmen zur Verminderung der Partikel-emission bei einer verbesserten Unterdrückung der Oxidation des im Dieselkraftstoff enthaltenen Schwefels von $SO_2$ zu $SO_3$ ansetzen.

Es ist somit Aufgabe der vorliegenden Erfindung einen gattungsgemäßen Katalysator zur oxidativen Reinigung der Abgase von Dieselmotoren mit hoher Konversionsleistung für Kohlenwasserstoffe und Kohlenmonoxid und gehemmter Oxidationswirkung gegenüber Stickoxiden und Schwefeldioxid anzugeben, dessen Oxidationswirkung auf $SO_2$ gegenüber dem Stand der Technik weiter vermindert ist und der gleichzeitig ein verbessertes Langzeitverhalten aufweist.

Diese Aufgabe wird gelöst durch einen Katalysator zur oxidativen Reinigung der Abgase von Dieselmotoren mit hoher Konversionsleistung für Kohlenwasserstoffe und Kohlenmonoxid und gehemmter Oxidationswirkung gegenüber Stickoxiden und Schwefeldioxid, enthaltend einen monolithischen Katalysatorkörper mit frei durchström-baren Kanälen aus Keramik oder Metall, der mit einer aktivitätsfördernden Dispersionsbeschichtung aus den feinteiligen Metalloxiden Aluminiumoxid, Titanoxid, Siliziumoxid, Zeolith oder deren Abmischungen als Träger für die katalytisch aktiven Komponenten beschichtet ist, wobei die aktiven Komponenten als mit Vanadin dotierte bzw. mit einer oxidischen Vanadinverbindung in Berührung stehende Platingruppenmetalle Platin, Palladium, Rhodium und/oder Iridium vorliegen.

Der Katalysator ist dadurch gekennzeichnet, daß es sich bei den feinteiligen Metalloxiden um in der Oberfläche modifiziertes Aluminiumoxid, Titanoxid, Siliziumoxid, Zeolith oder deren Abmischungen handelt, die dadurch erhältlich sind, daß die feinteiligen Metalloxide oder deren Abmischungen in eine alkoholische Lösung einer Titanoxid- und/oder Siliziumoxidvorstufe eingerührt werden, das alkoholische Lösungsmittel unter ständigem Rühren bei vermindertem Druck abgezogen und der zurückbleibende Feststoff bei erhöhter Temperatur getrocknet und nach Vermahlen für die Dauer von 0,5 bis 4 Stunden unter Zersetzung der Titan- und/oder Siliziumoxidvorstufen zu Titandioxid bzw. Siliziumdioxid bei 300 bis 600 ° C kalziniert wird.

Durch diese erfindungsgemäßen Maßnahmen werden die Oberflächeneigenschaften der Metalloxide vorteilhaft modifiziert. Es wurde gefunden, daß die so behandelten Metalloxide eine positive Wirkung auf die Verminderung der Oxidation von $SO_2$ zu $SO_3$ haben. Im Gegensatz zu der in der DE-OS 39 40 758 beschriebenen physikalischen Mischung von zum Beispiel Aluminiumoxid mit Titanoxid (Degussa P 25, Rutil/Anatas-Gemisch, 51 $m^2$/g spezifische Oberfläche), weist das zur Oberflächenmodifikation auf die restlichen Metalloxide aufgebrachte Titanoxid ein wesentlich verbessertes Langzeitverhalten auf.

Bei den feinteiligen Metalloxiden, die erfindungsgemäß in der Oberfläche modifiziert werden, handelt es sich um in der Katalysatortechnik bekannte hochoberflächige Metalloxide, wie zum Beispiel Aluminiumoxid der Übergangsreihe, die zur Verbesserung ihrer Temperaturstabilität noch in an sich bekannter Weise mit zum Beispiel Seltenerdoxiden dotiert sein können.

Für eine wirkungsvolle Modifizierung der Metalloxide ist es erforderlich, ihre spezifische Oberfläche mit einer 1 bis 5 Monolagen umfassenden Schicht aus Titandioxid und/oder Siliziumdioxid zu versehen. Die notwendige Menge $TiO_2$ für die Beschichtung einer spezifischen Oberfläche von 100 $m^2$ mit einer Monolage berechnet sich nach Tan et al. ("Coated Silica as Support for Platinum Catalyst" in Journal of Catalysis 129 (1991) 447 - 456) zu 0,098 g $TiO_2$. Als Titanoxid- und/oder Siliziumoxidvorstufen können besonders vorteilhaft Organo-Titan- bzw. Organo-Siliziumverbindungen der allgemeinen Formel $Ti(OR)_4$ bzw. $Si(OR)_4$ eingesetzt werden, wobei R für einen organischen Rest steht. Geeignete Titanoxidvorstufen sind zum Beispiel Tetraethylorthotitanat ($Ti[OC_2H_5]_4$), Tetra-tert-butylorthotitanat ($Ti[OC(CH_3)_3]_4$), Tetra-isopropylorthotitanat ($Ti[OCH(CH_3)_2]_4$ und Tetra-propylorthotitanat ($Ti[OCH_2CH_2CH_3]_4$).

Für eine optimale Entfaltung der vorteilhaften Wirkungen der modifizierten Metalloxide sollten sie in einer Konzentration von 30 bis 250, bevorzugt 75 bis 180, insbesondere 90 bis 150 g/l Katalysatorvolumen in Form einer Dispersionsbeschichtung auf dem Katalysatorkörper aufgebracht werden. Das Vanadin, berechnet als $V_2O_5$, kann in einer Konzentration von 0,1 bis 15 g/l Katalysatorvolumen und die Platingruppenmetalle in einer Konzentration von 0,1 bis 7 g/l Katalysatorvolumen vorliegen. Als Katalysatorkörper eignen sich monolithische, inerte Träger in Wabenform mit 5 bis 100 Zellen/$cm^2$. Von den Platingruppenme-

3

tallen haben sich besonders Platin und/oder Palladium bewährt.

Die mit Vanadin dotierten bzw. mit einer oxidischen Vanadinverbindung in Berührung stehenden Platingruppenmetalle sind entsprechend der DE-OS 39 40 758 erhältlich durch gleichzeitiges oder in beliebiger Reihenfolge nacheinander erfolgendes Imprägnieren der aktivitätsfördernden Dispersionsbeschichtung mit einer Lösung von Verbindungen der Platingruppenmetalle und einer Lösung einer Vanadinverbindung, Trocknen sowie gegebenenfalls Kalzinieren bei Temperaturen von mindestens 200 ° C, bevorzugt in einem Wasserstoff enthaltenden Gasstrom. Die Imprägnierung mit jeweils mindestens einem der beiden Ausgangsstoffe für die aktive Komponente kann nach oder vor dem Aufbringen der aktivitätsfördernden Dispersionsbeschichtung auf den inerten Träger erfolgen.

Eine völlig unerwartete und überraschende Wirkung haben die erfindungsgemäß zu verwendenden oberflächenmodifizierten Metalloxide auf die Oberflächenrauhigkeit der fertigen Dispersionsbeschichtung. Es zeigte sich, daß die erfindungsgemäßen Katalysatoren eine größere Oberflächenrauhigkeit aufweisen als Vergleichskatalysatoren aus dem Stand der Technik, obwohl in bei den Fällen Metalloxide mit gleichen mittleren Korndurchmessern eingesetzt werden. Auf die höhere Oberflächenrauhigkeit kann zum Teil die verbesserte Konversionsleistung der erfindungsgemäßen Katalysatoren zurückgeführt werden. Durch die Oberflächenrauhigkeit wird das Abgas in den Kanälen des Katalysatorkörpers stärker verwirbelt und kommt somit intensiver mit der katalytischen Beschichtung in Kontakt.

Die Erfindung wird nun anhand einiger Beispiele näher erläutert.

Es zeigen:

Figur 1: Alterungszyklus für Dieseloxidationskatalysatoren

Figur 2a: Rauhigkeitsmessung an der Beschichtungsoberfläche eines Vergleichskatalysators VK1

Figur 2b: Rauhigkeitsmessung an einer Beschichtungsoberfläche eines erfindungsgemäßen Katalysators K1

Für die Herstellung von erfindungsgemäßen Katalysatoren kamen wabenförmige Katalysatorkörper aus Cordierit zum Einsatz. Sie wiesen eine Zelldichte von 62 Zellen/cm$^2$ mit Wandstärken von 0,17 mm auf.

Vergleichsbeispiel 1 Vergleichskatalysator VK1

Ein Vergleichskatalysator aus dem Stand der Technik wurde wie folgt hergestellt.

Es wurde eine wäßrige Beschichtungsdispersion mit einem Feststoffgehalt von 30 % hergestellt. Die Suspension enthielt, bezogen auf die Trockenmasse, 60 Gew.-% $\gamma$-Aluminiumoxid ( 180 m$^2$/g spezifische Oberfläche) und 40 Gew.-% Titanoxid (Degussa P 25; 50 m$^2$/g spezifische Oberfläche; Rutil/Anatas-Gemisch). Anschließend wurde ein Katalysatorkörper durch Eintauchen in die Beschichtungsdispersion mit den Metalloxiden beschichtet und nach Ausblasen überschüssiger Suspension bei 120 ° C an Luft getrocknet. Nach einer 2-stündigen Kalzinierung bei 400 ° C wurde der beschichtete Katalysatorkörper mit einer wäßrigen Lösung von Pt(NH$_3$)$_4$(OH)$_2$ imprägniert, bei 150 ° C an Luft getrocknet und bei 300 ° C kalziniert. Danach erfolgte eine Imprägnierung mit Vanadyloxalat, Trocknung bei 120 ° C und Vanadylzersetzung bei 500 ° C an Luft. Die so gewonnene Katalysatorvorstufe wurde für die Dauer von 2 Stunden bei 500 ° C im Formiergasstrom (95 % N$_2$, 5 % H$_2$) reduziert.

Der fertige Katalysator enthielt pro Liter Katalysatorvolumen 64 g Titanoxid, 96 g Aluminiumoxid, 5 g Vanadiumpentoxid und 1,77 g Platin

Vergleichsbeispiel 2 Vergleichskatalysator VK2

In Analogie zu Vergleichsbeispiel 1 wurde ein zweiter Vergleichskatalysator hergestellt. An Stelle des Titanoxids P 25 von Degussa wurde jetzt eine 100 %-ige Anatasmodifikation (spezifische Oberfläche 95 m$^2$/g) eingesetzt.

Beispiel 1 Erfindungsgemäßer Katalysator K1 mit TiO$_2$ modifiziertem $\gamma$-Aluminiumoxid

Für den erfindungsgemäßen Katalysator wurde dasselbe $\gamma$-Aluminiumoxid wie in Vergleichsbeispiel 1 eingesetzt. Zur Modifikation seiner spezifischen Oberfläche mit Titanoxid wurde das $\gamma$-Aluminiumoxid in eine alkoholische Lösung (Ethanol) von Tetraethylorthotitanat (C$_8$H$_{20}$O$_4$Ti) eingerührt. Nach 2-stündigem Rühren wurde das Ethanol mittels eines Rotationsverdampfers (Wasserstrahlvakuum, T = 50 ° C) abgezogen und das entstehende Material bei 120 ° C für 16 Stunden an Luft getrocknet. Nach Vermahlen wurde das entstandene TiO$_2$/Al$_2$O$_3$-Pulver bei 400 ° C für 4 Stunden an Luft kalziniert.

Das so hergestellte TiO$_2$/Al$_2$O$_3$-Pulver enthielt, bezogen auf sein Gesamtgewicht, 60 Gew.-% Aluminiumoxid und 40 Gew.-% Titanoxid. Diese Menge Titanoxid entspricht einer Beschichtung der spezifischen Oberfläche des eingesetzten Aluminiumoxids mit etwa 3 Monolagen Titandioxid, berechnet nach Tan et al. ("Coated Silica as Support for Platinum Catalyst" in Journal of Catalysis 129, (1991) 447 - 456).

Aus dem vorgefertigten $TiO_2/Al_2O_3$-Pulver wurde eine wäßrige Beschichtungsdispersion mit 30 %-igem Feststoffgehalt angesetzt. Mit dieser Beschichtungsdispersion wurde ein Katalysatorkörper beschichtet und identisch zu Beispiel 1 weiterverarbeitet. Der fertige Katalysator enthielt pro Liter Katalysatorvolumen 160 g $TiO_2/Al_2O_3$, 5 g $V_2O_5$ und 1,77 g Pt.

Beispiel 2 Erfindungsgemäßer Katalysator K2 mit $TiO_2$ modifiziertem Siliziumdioxid

In völliger Analogie zu Beispiel 1 wurde der erfindungsgemäße Katalysator K2 hergestellt. An Stelle von Aluminiumoxid wurde jedoch Siliziumdioxid (spezifische Oberfläche 260 $m^2/g$) eingesetzt. Der fertige Katalysator enthielt pro Liter Katalysatorvolumen 160 g $TiO_2/SiO_2$ zusammengesetzt aus 40 Gew.-% $TiO_2$ und 60 Gew.-% $SiO_2$, jeweils bezogen auf die Gesamtmenge $TiO_2/SiO_2$. Die gewählte Menge $TiO_2$ entsprach einer Beschichtung der spezifischen Oberfläche des Siliziumdioxids mit etwa 2 Monolagen Titandioxid.

Beispiel 3 Erfindungsgemäßer Katalysator K3 mit $SiO_2$ modifiziertem $\gamma$-Aluminiumoxid

In völliger Analogie zu Beispiel 1 wurde der erfindungsgemäße Katalysator K3 hergestellt. Anstelle von Tetraethylorthotitanat ($C_8H_{20}O_4Ti$) wurde jedoch Tetraethoxisilan ($C_8H_{20}O_4Si$) eingesetzt. Der fertige Katalysator enthielt pro Liter Katalysatorvolumen 160 g $SiO_2/Al_2O_3$ zusammengesetzt aus 40 Gew.% $SiO_2$ und 60 Gew.% $Al_2O_3$, jeweils bezogen auf die Gesamtmenge $SiO_2/Al_2O_3$. Die gewählte Menge an $SiO_2$ entsprach einer Beschichtung der spezifischen Oberfläche des Aluminiumoxides mit etwa 2 Monolagen Siliziumdioxid.

Beispiel 4 Erfindungsgemäßer Katalysator K4 mit $SiO_2$ modifiziertem Titanoxid

In völliger Analogie zu Beispiel 3 wurde der erfindungsgemäße Katalysator K4 hergestellt. Anstelle von Aluminiumoxid wurde jedoch Titandioxid (spezifische Oberfläche 95 $m^2/g$) eingesetzt. Der fertige Katalysator enthielt pro Liter Katalysatorvolumen 20 Gew.% $SiO_2$ und 80 Gew.% $TiO_2$, jeweils bezogen auf die Gesamtmenge $SiO_2/TiO_2$. Die gewählte Menge $SiO_2$ entsprach einer Beschichtung der spezifischen Oberfläche des Titandioxids mit etwa 2 Monolagen Siliziumdioxid.

Beispiel 5 Anspring- und Aktivitätstests

Die Dieseloxidationskatalysatoren gemäß den Vergleichsbeispielen 1 und 2 sowie den Beispielen 1 - 4 wurden am stationären Motorprüfstand getestet. Er war mit einem 4-Zylinder-Dieselmotor (55 KW; 1,6 l Hubraum) und einer Wasserwirbelstrombremse (Typ 230 der Schenck AG) ausgerüstet. Als Testkraftstoff wurde ein handelsüblicher Dieselkraftstoff mit 0,2 % Schwefel verwendet.

Bei den Anspringtests wurde die Konvertierung von Kohlenmonoxid, Kohlenwasserstoffen, Stickoxiden und Schwefeldioxid als Funktion der Abgastemperatur vor Katalysator bei einer Raumgeschwindigkeit von 120.000 $h^{-1}$ gemessen.

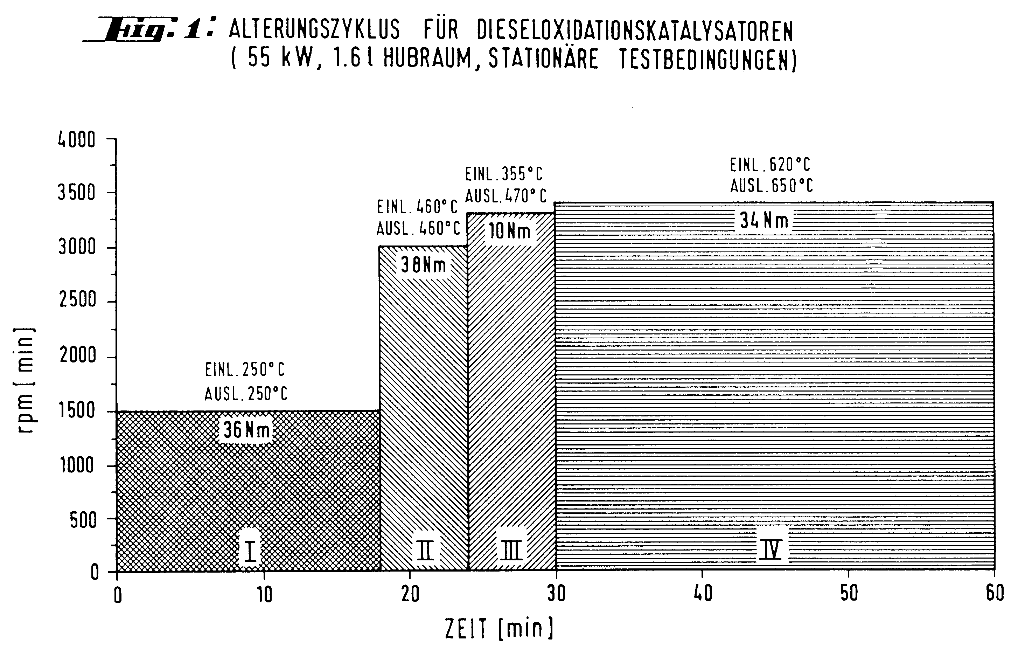

Nach der Testung im frischen Zustand wurden die Katalysatoren am Motor für 50 Stunden gealtert. Der verwendete Alterungszyklus ist in Figur 1 dargestellt. Ein Zyklus dauerte jeweils 60 Minuten und wurde zur Alterung der Katalysatoren fünfzigmal wiederholt.

Die Ergebnisse der Anspringtests sind in den Tabellen 1 und 2 zusammengefaßt. Aus den Ergebnissen ergibt sich eine Absenkung der $SO_2$-Konversion bei hohen Temperaturen für die Katalysatoren K1 bis K4 gegenüber den Vergleichskatalysatoren bei ansonsten ähnlichen Konversionsraten für CO, HC und $NO_x$.

Beispiel 6

Die in den Vergleichsbeispielen 1 und 2 sowie den Beispielen 1 bis 4 beschriebenen Katalysatoren wurden mittels Röntgendiffraktometrie, Lichtmikroskopie und Oberflächenrauhigkeitsmessung analysiert.

Die röntgendiffraktometrischen Untersuchungen wurden an vorgefertigten $TiO_2/Al_2O_3$-,$TiO_2/SiO_2$-bzw. $SiO_2/TiO_2$-Oxidpulver vorgenommen. Die Oxidprobe des Katalysators VK1 zeigte im Frischzustand das Vorliegen der Modifikationen Anatas und Rutil im Verhältnis 78/22. Nach Alterung für 7 h bei 650° C in Luft verringerte sich der Anteil der katalytisch bevorzugten Anatas-Modifikation auf 38 %. Ein ähnliches Verhalten zeigte die Oxidprobe des Vergleichskatalysators VK2. Die im Frischzustand zu 100 % vorliegende Anatasmodifikation wandelte sich durch die Alterung bei 650° C zu 65 % in Rutil um. Im Gegensatz dazu konnten bei den erfindungsgemäßen Oxidproben sowohl im Frischzustand als auch nach Alterung für 7 h bei 650° C in Luft jeweils das Vorliegen einer 100 %-igen Anatasmodifikation festgestellt werden (Tabelle 3).

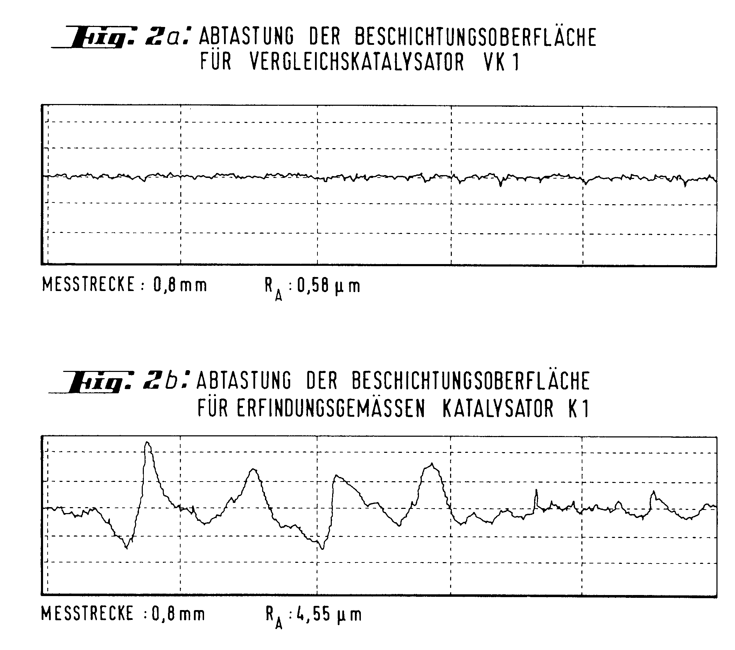

Lichtmikroskopische Untersuchungen der beschichteten Kanalwandungen der Katalysatoren zeigten bei den Vergleichskatalysatoren VK1 und VK2 glatte und kompakte Beschichtungsoberflächen. Die erfindungsgemäßen Katalysatoren K1 bis K4 wiesen dagegen rauhe und poröse Beschichtungsoberflächen auf. Diese Tatsache wurde quantitativ durch Rauheitsmessungen mit dem RauheitsMeßgerät Perthometer 58P der Firma Mahr-Perthen bestätigt. Die Figuren 2a und 2b zeigen Abtastungen der Beschichtungsoberfläche auf einer Länge von 0,8 mm für den Vergleichskatalysator VK1 (Figur 2a) und erfindungsgemäßen Katalysator K1 (Figur 2b). Der Vergleichskatalysator wies eine mittlere quadratische Rauhigkeit ($R_A$) von nur 0,58 $\mu$m auf, während sie bei dem erfindungsgemäßen Katalysator 4,55 $\mu$m betrug und somit um den Faktor 9 größer war.

Durch die rauhe Beschichtungsoberfläche der erfindungsgemäßen Katalysatoren K1 bis K4 bilden sich im Abgasstrom lokale Turbulenzen aus, wodurch der Stoff-und Wärmetransport aus der Gasphase zur Oberflächenschicht beschleunigt wird.

TABELLE 1    Ergebnisse der Anspringtests am Dieselmotor (55 kW, 1,6 1 Hubraum, stationäre Testbedingungen) für die Katalysatoren im Frischzustand (RG = 120.000 $h^{-1}$)

| Katalysator | --T [50%]-- | | --- Konvertierung ---- | | | | 450° C |
| | | | -------- 350° C -------- | | | | |
| | CO | HC | CO | HC | $SO_2$ | $NO_x$ | $SO_2$ |
|---|---|---|---|---|---|---|---|
| VK1 | 220 | 221 | 91 | 82 | 13 | 2 | 21 |
| VK2 | 221 | 222 | 90 | 80 | 14 | 1 | 25 |
| K 1 | 195 | 217 | 95 | 78 | 0 | 3 | 5 |
| K 2 | 200 | 217 | 90 | 79 | 4 | 3 | 9 |
| K 3 | 205 | 215 | 91 | 79 | 0 | 1 | 2 |
| K 4 | 203 | 210 | 89 | 85 | 0 | 3 | 1 |

EP 0 566 878 A1

EP 0 566 878 A1

TABELLE 2   Ergebnisse der Anspringtests am Dieselmotor (55 kW, 1,6 l Hubraum, stationäre Testbedingungen) für die Katalysatoren nach Alterung (RG = 120.000 h$^{-1}$)

| Katalysator | --T [50%]-- | | --- Konvertierung ---- | | | | 450° C |
| | | | 350° C | | | | |
| | CO | HC | CO | HC | $SO_2$ | $NO_x$ | $SO_2$ |
|---|---|---|---|---|---|---|---|
| VK1 | 236 | 242 | 91 | 77 | 5 | 2 | 11 |
| VK2 | 230 | 241 | 90 | 79 | 8 | 2 | 13 |
| K 1 | 220 | 227 | 91 | 75 | 0 | 3 | 2 |
| K 2 | 225 | 217 | 90 | 73 | 2 | 3 | 1 |
| K 3 | 218 | 218 | 91 | 70 | 0 | 3 | 2 |
| K 4 | 221 | 220 | 90 | 71 | 0 | 2 | 1 |

TABELLE 3

Ergebnisse der röntgendiffraktometrischen Untersuchungen von Proben der oxidischen Beschichtungsdispersionen ($TiO_2/Al_2O_3$, $TiO_2/SiO_2$ bzw. $SiO_2/TiO_2$) der Katalysatoren VK1, VK2, K1, K2, K3, K4

| Katalysator | Frischzustand Anatas : Rutil | 7 h, 650 °C, Luft, Ofen Anatas : Rutil |
|---|---|---|
| VK1 | 78 : 22 | 38 : 62 |
| VK2 | 100 : 0 | 35 : 65 |
| K 1 | 100 : 0 | 100 : 0 |
| K 2 | 100 : 0 | 100 : 0 |
| K 3 | - | - |
| K 4 | 100 : 0 | 100 : 0 |

**Patentansprüche**

1. Katalysator zur oxidativen Reinigung der Abgase von Dieselmotoren mit hoher Konversionsleistung für Kohlenwasserstoffe und Kohlenmonoxid und gehemmter Oxidationswirkung gegenüber Stickoxiden und Schwefeldioxid, enthaltend einen monolithischen Katalysatorkörper mit frei durchströmbaren Kanälen aus Keramik oder Metall, der mit einer aktivitätsfördernden Dispersionsbeschichtung aus den feinteiligen Metalloxiden Aluminiumoxid, Titanoxid, Siliziumoxid, Zeolith oder deren Abmischungen als Träger für die katalytisch aktiven Komponenten beschichtet ist, wobei die aktiven Komponenten als mit Vanadin dotierte bzw. mit einer oxidischen Vanadinverbindung in Berührung stehende Platingruppenmetalle Platin, Palladium, Rhodium und/oder Iridium vorliegen,
   **dadurch gekennzeichnet**,
   daß es sich bei den feinteiligen Metalloxiden um in der Oberfläche modifiziertes Aluminiumoxid, Titanoxid, Siliziumoxid, Zeolith oder deren Abmischungen handelt, die dadurch erhältlich sind, daß die feinteiligen Metalloxide oder deren Abmischungen in eine alkoholische Lösung einer Titanoxid- und/oder Siliziumoxidvorstufe eingerührt werden, das alkoholische Lösungsmittel unter ständigem Rühren abgezogen und der zurückbleibende Feststoff bei erhöhter Temperatur getrocknet und nach Vermahlen für die Dauer von 0,5 bis 4 Stunden unter Zersetzung der Titan- und/oder Siliziumoxidvorstufen zu Titandioxid bzw. Siliziumdioxid bei 300 bis 600° C kalziniert wird.

2. Katalysator nach Anspruch 1,
   **dadurch gekennzeichnet**,
   daß bei der Herstellung der modifizierten Metalloxide die Menge der gelösten Titan- und/oder Siliziumoxidvorstufen so bemessen wird, daß nach Kalzinierung der Metalloxide die spezifische Oberfläche der Metalloxide mit einer 1 bis 5 Monolagen umfassenden Schicht aus Titandioxid und/oder Siliziumdioxid versehen ist.

3. Katalysator nach Anspruch 1 oder 2,
   **dadurch gekennzeichnet**,
   daß es sich bei den Titanoxid- und/oder Siliziumoxidvorstufen um Organo-Titan- bzw. Organo-Siliziumverbindungen der allgemeinen Formel $Ti(OR)_4$ bzw. $Si(OR)_4$ handelt, wobei R für einen organischen Rest steht.

4. Katalysator nach den Ansprüchen 1 bis 3,
   **dadurch gekennzeichnet**,
   daß die aktivitätsfördernde Dispersionsbeschichtung in einer Konzentration von 30 - 250, bevorzugt 75 - 180, insbesondere 90 - 150 $g/dm^3$ Katalysatorvolumen, das Vanadin, berechnet als $V_2O_5$, in einer Konzentration von 0,1 - 15 $g/dm^3$ Katalysatorvolumen und die Platingruppenmetalle in einer Konzentration von 0,1 - 7 $g/dm^3$ Katalysatorvolumen vorliegen.

5. Katalysator nach den Ansprüchen 1 bis 4,
   **dadurch gekennzeichnet**,
   daß als strukturverstärkende Körper ein keramischer oder monolithischer Träger, bevorzugt in monolithischer Wabenform (Trägerkatalysator), eingesetzt wird.

6. Katalysator nach den Ansprüchen 1 bis 5,
   **dadurch gekennzeichnet**,
   daß die Zelldichte des monolithischen bzw. wabenförmigen inerten Trägers 5 bis 100 $Zellen/cm^2$ beträgt.

7. Katalysator nach den Ansprüchen 1 bis 6,
   **dadurch gekennzeichnet**,
   daß als Platingruppenmetall Platin und/oder Palladium vorliegt.

**Fig. 1:** ALTERUNGSZYKLUS FÜR DIESELOXIDATIONSKATALYSATOREN
( 55 kW, 1.6 l HUBRAUM, STATIONÄRE TESTBEDINGUNGEN)

EP 0 566 878 A1

## Fig. 2a: ABTASTUNG DER BESCHICHTUNGSOBERFLÄCHE FÜR VERGLEICHSKATALYSATOR VK 1

MESSTRECKE : 0,8 mm          $R_A$ : 0,58 μm

## Fig. 2b: ABTASTUNG DER BESCHICHTUNGSOBERFLÄCHE FÜR ERFINDUNGSGEMÄSSEN KATALYSATOR K 1

MESSTRECKE : 0,8 mm          $R_A$ : 4,55 μm

EP 0 566 878 A1

| | **EINSCHLÄGIGE DOKUMENTE** | | EP 93104685.8 |

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| X | EP - A1 - 0 225 953 (THE DOW CHEMICAL COMPANY) * Seite 3, Zeile 53 - Seite 4, Zeile 53; Beispiele; Ansprüche * -- | 1-3,7 | B 01 J 23/64 B 01 J 21/04 B 01 J 21/06 B 01 J 21/08 B 01 J 29/04 B 01 J 37/02 |
| A | EP - A2 - 0 068 603 (COAL INDUSTRIES (PATENT) LIMITED) * Seite 1, Zeile 18 - Seite 2, Zeile 19; Beispiel; Ansprüche * -- | 1-7 | B 01 J 35/04 F 01 N 3/20 |
| D,A | JOURNAL OF CATALYSIS, vol. 129, 1991, Academic Press, Inc. TAN et al. "Coated silica as Support for Platinum Catalyst" Seiten 447-456 * Seite 447, linke Spalte, Zeile 1 - Seite 448, rechte Spalte, Zeile 20; Seite 451, rechte Spalte, Zeile 6 - Seite 452, rechte Spalte, Zeile 7 von unten * -- | 1-7 | |
| D,A | DE - A1 - 3 940 758 (DEGUSSA AG) * Beispiele; Ansprüche * ---- | 1-7 | RECHERCHIERTE SACHGEBIETE (Int. Cl.⁵) B 01 J B 01 D F 01 N |

Der vorliegende Recherchenbericht wurde für alle Patentansprüche erstellt.

| Recherchenort WIEN | Abschlußdatum der Recherche 14-07-1993 | Prüfer TENGLER |